# EUROPEAN PATENT SPECIFICATION

(11) **EP 2 198 392 B1**
(45) Date of publication and mention of the grant of the patent: **16.11.2016**
(21) Application number: 08834614.3
(22) Date of filing: 26.09.2008
(51) Int. Cl.: G06K 9/00, G07D 7/12

(54) **DOCUMENT VALIDATOR SUBASSEMBLY**
BAUGRUPPE FÜR EINEN DOKUMENTENPRÜFER
SOUS-ENSEMBLE DE VALIDATION DE DOCUMENTS

(30) Priority: 26.09.2007 US 975341 P
(43) Date of publication of application: 23.06.2010
(73) Proprietor: Crane Payment Innovations, Inc., Malvern, PA 19355 (US)
(72) Inventor: ZOLADZ, JR., Edward M., West Chesger Pennsylvania 19380 (US); SNIDER, John D., West Chester Pennsylvania 19382 (US)
(74) Representative: Peterreins Schley
(86) International application number: PCT/US2008/077872
(87) International publication number: WO 2009/042876

(56) References cited:
- WO-A1-02/17217
- JP-A- 9 054 850
- US-A- 5 923 413
- US-A1- 2003 081 197
- US-B1- 6 222 623
- US-B2- 6 994 203

## Description

### FIELD OF DISCLOSURE

This disclosure relates to a compact validator subassembly that illuminates documents with a substantially constant irradiance level of light even though the distance between the light source and the documents vary from one document to another.

### BACKGROUND

In the field of bill validation, for example, validators used in vending machines and the like typically utilize optical, magnetic and other sensors to obtain data from an inserted bill. In some units, multiple light-emitting diode (LED) light sources and phototransistor receivers are positioned on opposite sides of a bill passageway, and generate signals corresponding to the light transmitted through the bill as a bill moves thereby. The signals are processed to determine certain information, such as the position of the bill in the passageway and the authenticity of the bill. The signals typically are compared to predetermined measurements stored in memory that correspond to genuine bills.

Conventional bill validation systems utilizing LED light sources also use lenses to focus the light in order to meet system performance requirements. However, some configurations do not provide sufficient light signal intensity levels to accurately validate documents. Other designs utilize high power light sources and focusing elements and are thus costly to manufacture. In addition, because the bill passageway generally is designed to be large enough to avoid jams, sensor measurements are sometimes adversely effected because the sensed signal varies depending upon the distance of a bill from the light source. US 2003/0081197 A1 describes a subassembly for a document validator. The subassembly includes a housing, a light pipe core seated in the housing, a light control layer and at least one light source. The apparatus may also include a prism structure layer between a top diffusing surface and the light control structure.
WO 02/17217 A1 describes a light-scanner that includes a wave guide. The scanner defines a scanning zone, and further includes a light-emitting diode, and a detector. The wave guide is disposed between the light-emitting diode and the scanning zone. The wave guide defines a light-admitting aperture and light-reflective surface. The light-admitting aperture and light reflecting surface cooperate to direct light from the light-emitting diode toward the scanning zone, and to focus light centrally along a path traveled by such light toward the detector.

### SUMMARY

The present disclosure relates to a subassembly for a document validator as defined in claim 1 and a light control component as defined in claim 7. As used in this disclosure, the term "documents" includes, but is not limited to, banknotes, bills, valuable papers, security papers, currency, checks, coupons, bank drafts, certificates and any other similar objects of value.

The subassembly includes a housing, a light pipe core having a top diffusing surface, a light control component associated with the top diffusing surface, and at least one light source coupled to the housing.

The light control component includes at least one aperture and can be made, for example of a plastic or polymer material. The light control component includes an array of apertures. The apertures are in the shape of elongated slits. Other features of the light control component that are included in some implementations are described in greater detail below.

In some implementations, the subassembly includes a prism structure layer, such as a brightness enhancing film, between the top diffusing surface and the light control component. The diffusing surface can include, for example, a random rough structure, a constant pitch pattern structure, or a variable pattern of protrusions. The housing can include one or more input light ports at the end(s) of the light pipe core. The light source can include a light housing, made for example of a reflective material, and one or more light emitting diodes (LEDs). Additional light housings and LEDs of different wavelengths can be included for some applications. The housing can also include first and second reflective shells configured to surround the light pipe core.

A document sensing arrangement, which is not part of the invention, also is disclosed. The document sensing arrangement includes a light source subassembly for positioning on a first side of a document passageway, and a light sensor for positioning on a second side of the document passageway across from the light source subassembly. The light control component can include the features mentioned above, as well as various features discussed in greater detail below.

Also described but not part of the invention is a method for illuminating a document in a document passageway with a substantially rectangular beam of substantially homogenous light using the document validator subassembly. The prism structure layer in the subassembly can be used to increase the light intensity output. The method can also include generating signals indicative of document authenticity or characterization based on the light passing through a document, or generating signals indicative of document authenticity or characterization based on the light reflected from a surface of a document.

A method of fabricating the document validator subassembly also is disclosed but not part of the invention. The method includes fabricating a light pipe core to provide light output across a document passageway, fabricating a diffusing structure onto an output side of the core, and applying a light control component to the diffusing structure. The light control component can include the features mentioned above, as well as various features discussed in greater detail below.

Some implementations of the fabrication method connecting a reflective housing to the light pipe core. In addition, the method can include coupling at least one LED light source package to the housing, and may also include applying at least one layer of brightness enhancing film between the diffusing structure and the light control component.

In some implementations, which are not part of the invention, there is provided a light bar structure fabrication technique including fabricating a light pipe core to provide a light output across a document passageway, fabricating a diffusing structure layer, and fabricating a louver structure layer onto an output side of the core.

Some implementations provide one or more of the following advantages. The document validator subassembly can provides homogenous illumination of a document over the entire height and width of the bill passageway, which limits signal variations over the range of inserted document positions to result in more accurate validation processing. The subassembly can illuminate the entire width of the passageway, which permits a full scan of the entire surface of a document to improve the security of document recognition. The design also permits use of multiple wavelengths of light using only a few light source components, and the subassembly has a compact size that is ideal for use in a document validator that has limited physical space.

Various aspects of the invention are set forth in the claims. Various other features and advantages will be readily apparent from the following detailed description and the accompanying drawings.

### BRIEF DESCRIPTION OF THE DRAWINGS

FIG. 1 is a simplified top view of a document passageway.
FIG. 2 is a side view of a configuration 15 of a single LED light source and receiver.
FIG. 3 is a simplified, enlarged, cross-sectional view of a configuration of a document validator.
FIG. 4A is an exploded and perspective view of a document validator subassembly.
FIG. 4B illustrates an example of the document validator subassembly.
FIG. 4C illustrates an example of a light control component.
FIG. 4D illustrates further details of the light control component according to a particular example.
FIG. 5 is a perspective view of the subassembly.
FIG. 6A is an enlarged, simplified, cross-sectional schematic diagram of a light pipe core.
FIG. 6B illustrates an example of dimensions of a light pipe core suitable for use in a bill validator subassembly.
FIG. 6C illustrates and enlarged portion C of FIG. 6B.
FIG. 7 is an enlarged, simplified side-view schematic diagram illustrating prismatic structures of a brightness enhancement film.
FIGS. 8A and 8B are enlargeds, simplified, exploded, perspective view schematic diagrams of light core assemblies for document validators.

### DETAILED DESCRIPTION OF THE DISCLOSURE

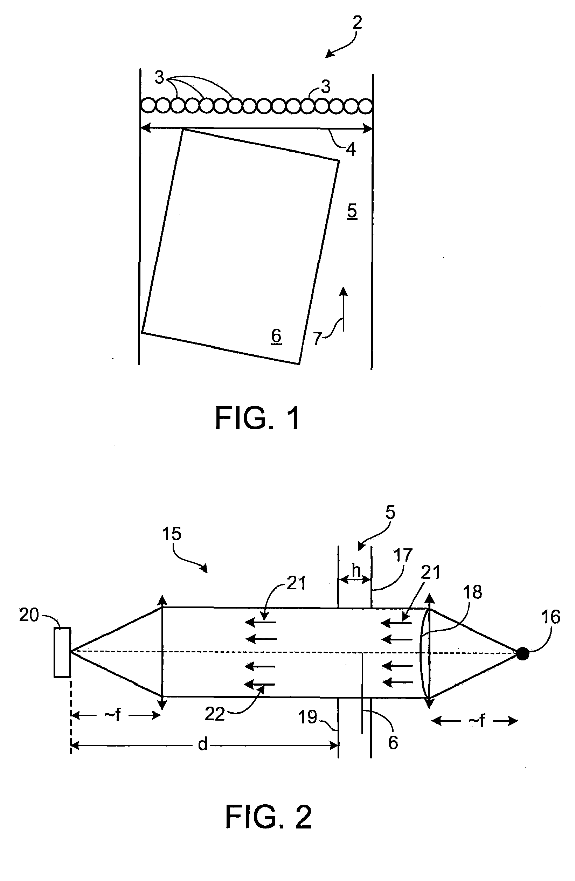

FIG. 1 is a simplified top view of a document passageway 5 having a light spot configuration 2 of multiple light spots 3 arranged in a single line to cover the width 4 of a document passageway 5. The width 4 is wider than the widest document of a set of documents to be sampled, and a banknote or bill 6 is shown that is narrower than the document passageway. In this example, the document 6 is skewed slightly as it travels in the direction of arrow 7.

Although the subassemblies are described herein with regard to their use in document validators, the subassemblies can be used in other devices as well.

Referring again to Figure 1, the spots 3 may be generated by one or more light sources, typically by one or more light-emitting diodes (LEDs). Such a configuration permits substantially 100% scanning coverage of an inserted bill 6 as it moves in the direction of arrow 7 through the bill passageway. In particular, the bill can be transported between the light source or sources and one or more light receiving sensors (not shown) arranged on the opposite side of the passageway. In such a configuration, signals generated by the receivers correspond to the light transmitted through the bill can be processed to determine information such as bill length and width, bill position at any particular moment in time, bill authenticity, bill characterization, and country of origin of the bill. Light receivers can also be arranged on the same side as the light sources to receive light reflected from the bill in a similar fashion as described for transmitted light.

In some implementations, there are between ten and twelve light spots across the bill passageway for sampling data from the bill, but more or less spots can be used. Each spot can be, for example, approximately 7.6mm in diameter with each spot being sampled at three or more wavelengths. For example, light spots having wavelengths in the visible, infrared, and near infrared spectrum can be used and the resultant data processed to glean different types of information from a bill. Signal processing techniques to determine bill characteristics, authenticity, nationality, denomination and/or bill position in the passageway are beyond the scope of the present disclosure and will not be discussed in detail herein.

FIG. 2 is a side view of a configuration 15 of a single LED light source and receiver wherein the light source 16 and receiver 20 are on opposite sides of the bill passageway 5. The LED source 16 is placed close to the focal point of a convergent lens 18 to generate substantially parallel beams of light 21 through an opening in the front wall 17 of the bill passageway 5 towards the bill 6. Part of the bill blocks some of the light beams 21 resulting in transmitted signals 22 which have passed through the bill. A detector 20, such as a PIN diode which can include a focusing lens, is placed a sufficient distance "d" from the rear wall 19 so that noise inherent in the light transmitted through the bill is minimized. The height "h" of the bill passageway can be approximately 2mm to 2.5mm, which is adequate to minimize the jam rate of bills, and the width 4 of the bill passageway can be greater than 90mm to accommodate bills of various widths.

To simplify the data processing required to authenticate or characterize a bill, substantially homogenous illumination of the bill is desirable. In practice, due to the size and light transmission features of existing LED light sources, generation of a parallel beam and a homogenous spot can only be approximated with a configuration of the type shown in FIG. 2. A group of such sensors positioned in a configurations like that shown in FIG. 1 can be sufficient to determine document position, but the signals generated are not entirely satisfactory for generating data to determine authenticity. Further, when several LED dies are used, the minimum spacing of the dies may result in spot offsets, and thus tight tolerances must be imposed on die placement which increases fabrication costs.

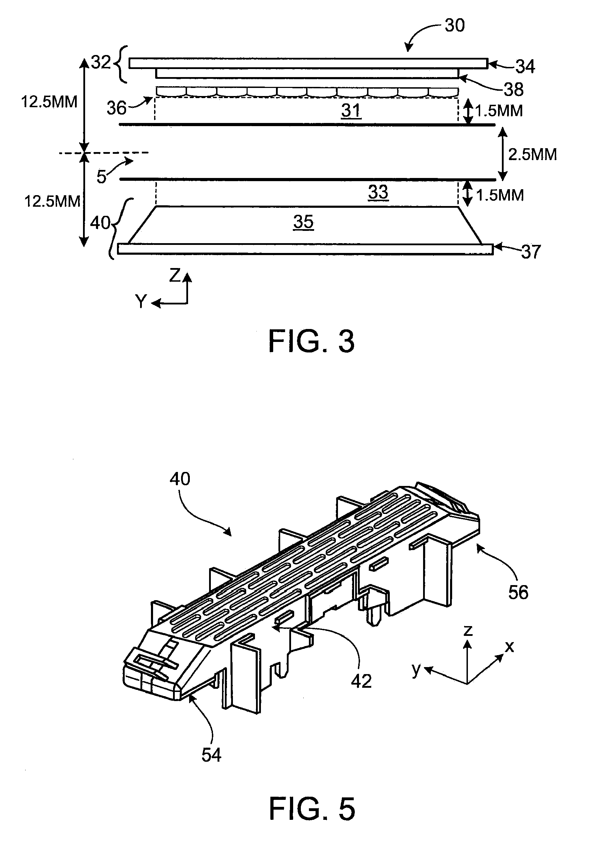

FIG. 3 is a simplified, enlarged, cross-sectional view of a configuration of a document validator 30. The document validator 30 includes a light sensor arrangement 32 on a first side of a document passageway 5, and a subassembly 40 that includes light bar 35 on the second side of the passageway. In this implementation, two transparent windows 31 and 33, which can be composed of Lexan™ material, define a portion of the document passageway 5 therebetween. The light sensor arrangement 32 includes an array of ten lenses 31 arranged in front of a sensor array 33 of ten detectors mounted on a printed circuit board (PCB) 34. The detectors generate electric signals corresponding to the light that is transmitted through a document as it travels through passageway 5 between the light source and the sensors, which signals are then processed by a microprocessor connected to the PCB 34. A suitable array of detectors can also be positioned on the same side of the passageway as the light source, to generate signals based on the light reflected from a document. The signals generated by the detectors may be used to determine the validity of a document.

The light bar 35 of FIG. is mounted to a light PCB 37, and provides light which exits from a top surface in the Z-direction to illuminate a document at a constant level regardless of the position of the document in the volume of the document passageway 5. As the document is transported past the document validator configuration 30, it may be closer to either the light sensor arrangement 32 or to the subassembly 40 depending on the transport conditions and/or the condition or fitness of the document. For example, a particular transport mechanism may transport a banknote (i.e., bill) past the arrangement 30 at a constant speed, but the exact position of the banknote within the height "h" of the passageway 5 may vary from one banknote to another. The position may depend upon whether a particular banknote is a crisp, new bill or an old, worn and limp bill. For use in a document validator, the light radiated by the light bar 35 should cover an area of at least 70 millimeters (mm) in length (width of a bill passageway) and at least 7mm in depth, and be uniform through the height "h" of approximately 2.5mm. However, the geometry of the light pipe core, which includes a long side and a substantially smaller short side, can result in a large difference in irradiation at different heights "h". Use of a suitable light control component (LCC), which is explained in detail below, overcomes the geometrical limitations of irradiation patterns to enable a document to be illuminated at a constant level regardless of its position within the height "h" of the passageway.

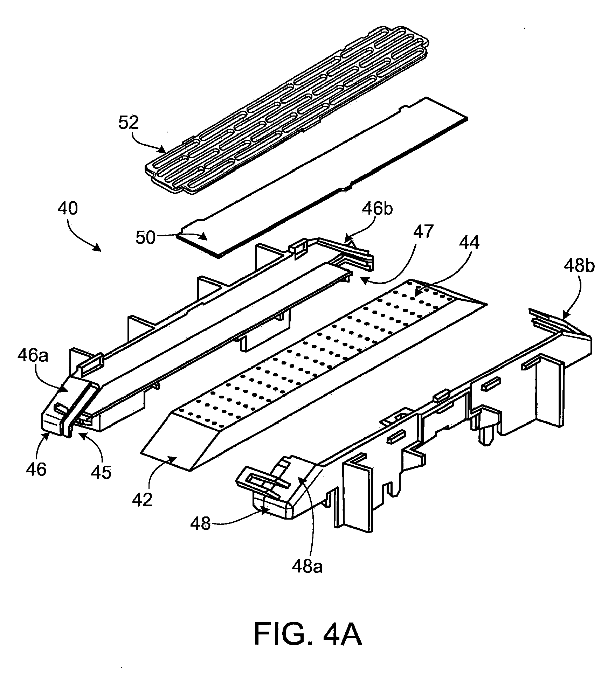

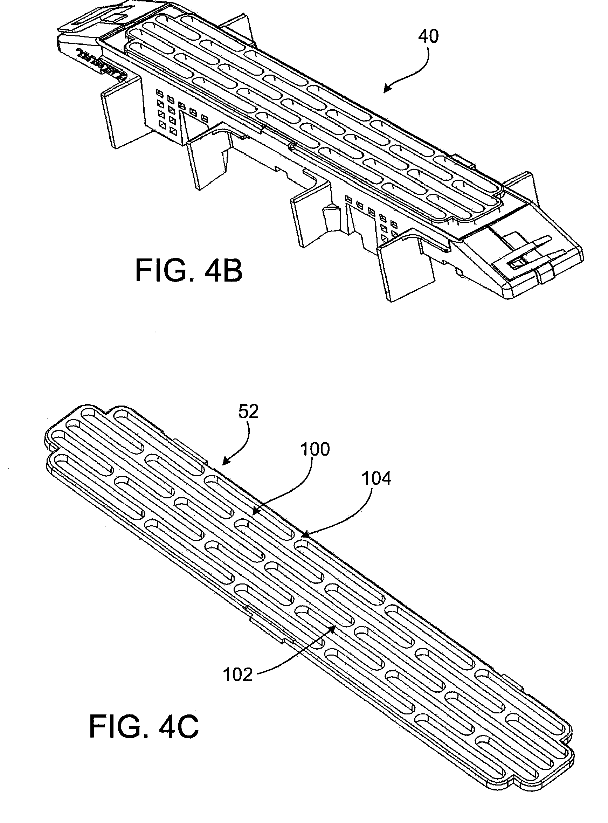

FIG. 4A is an exploded and perspective view of an implementation of a document validator subassembly 40. Subassembly 4 includes a light pipe core 42 including a top surface 44. A first reflective shell 46 and a second reflective shell 48 are configured to surround the light pipe core 42, and a brightness enhancement film (BEF) 50 and light control component (LCC) 52 are arranged for attachment to the top surface 44 of light pipe core 42. The two reflective shell parts 46, 48 are clipped together around the light pipe core 42 as shown in FIG. 4B so that there is minimal space between the core and the shell.

The light pipe core 42 can be made, for example, of a transparent polycarnbonate or acrylic material, and all faces except for the top surface 44 can be polished to favor internal reflections. The first and second reflective shells 46, 48 can be made of a white grade polybutylene terephtalate (PBT polymer material. The interior surface can comprise a reflective material, and the material can be white and may be diffusely reflective. A suitable PBT reflective material is available from the Bayer Company under the trade name "pocan B 7375" but similar white and diffusive material such as Spectralon™ can also be used. A white material permits a suitable substantially flat spectral response to occur across at least the visible wavelength to the near infrared wavelength spectrum region. A first aperture 45 and second aperture 47 located at both extremities of the protective shell form input ports for light sources (not shown), while the top surface 44 forms the light output area. In some implementations the output light area can have a diffuser structure to extract the light from the core. A suitable diffuser structure can be obtained by sanding the surface to obtain a random, rough pattern, or by molding a rough, random structure on the top surface 44. Other diffuser structures can also be used.

FIG. 5 is a cutaway perspective view of subassembly 40 shown in FIG. 4B to illustrate the placement of a first multi-die LED package 54 and a second multi-die LED package 56. The multi-die packages 54 and 56 can each contain two or more LED's, and in this implementation are located at opposite ends of the light pipe core 42 to form the light sources. The LED's can be of different wavelengths or can be of the same wavelength. If different wavelength LED's are utilized, they can be in the same LED package or in different LED packages. In this arrangement, the LED's are mounted horizontally on a PCB, and the light pipe core has a generally trapezoidal shape. However, in some implementations, only a single LED light source positioned, for example, at the first aperture 45 can be used.

In the illustrated example, the LCC 52 has a macro array of slits (e.g., elongated apertures) 100 made in a single plastic element (see FIG. 4C). The light travels through the apertures and is stopped by the walls 102 formed by the remaining material of the LCC element.

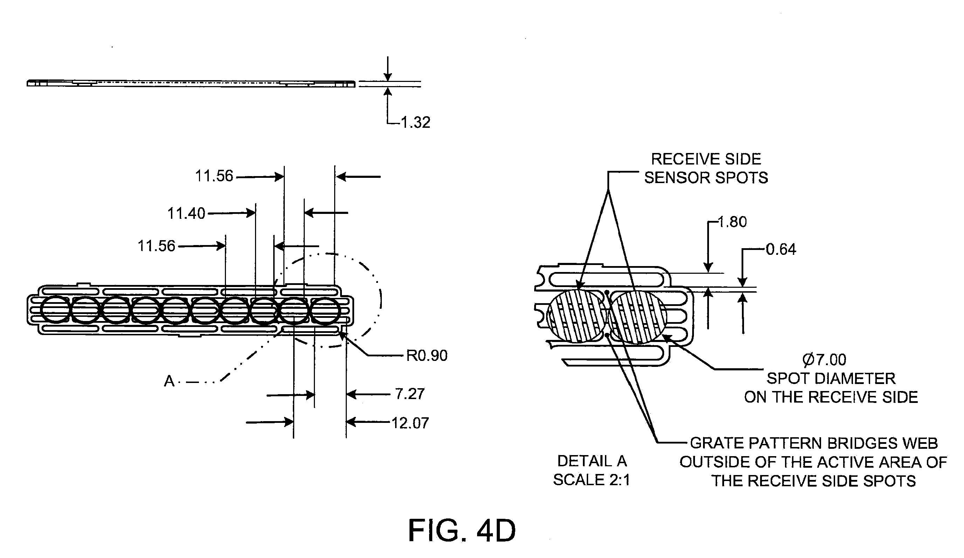

Examples of the dimensions of the LCC 52 are illustrated in FIG. 4D, in which units of length are in millimeters (mm). For example, the thickness of the illustrated LCC 52 is about 1.32 mm. In this example, the LCC has a louver structure comprising an array of slit-type apertures having a width of roughly 1.8 mm. The spacing of the slit apertures is a result of forming the thickness of the walls of the louver structure and is about 0.64 mm. The length of the slit apertures is about 11.5 mm. The dimensions (e.g., length, width, and spacing) can vary depending on the requirements of the particular application. Thus, different dimensions may be suitable for other implementations.

In some implementations, the louver structure 76 is comprised of an array of circular or other shaped apertures. The use of elongated apertures is advantageous because it limits the output angle in a different manner in two orthogonal directions, along the slit direction and perpendicular to it. The use of non-rectilinear shape results in limiting the output angles in various directions depending on shape. For example, when the apertures are of a circular shape, the output angle is limited identically in all directions.

In some implementations, the optical structure of the LCC 52 is optimized by the desired geometry of the light distribution exiting the LCC. Specifically, the size, number of apertures, and thickness of LCC 52, as well as placement of the apertures, can be varied either together or independently in order to optimize the geometry of the distribution of light exiting LCC 52.

In some implementations, a continuous slit of the length of the light bar is used. However, it is desirable to segment that length to insert bridging sections 104 (see FIG. 4C) for improved rigidity of LCC 52 an to maintain the spacing of the louver walls 102. In the illustrated example, the LCC 52 is configured such that louver structure is divided into five or six segments of slit-type apertures 100 along the length of LCC 52. In addition, in the illustrated example, the louver structure is divided into five segments along the width of LCC 52. It is desirable to stagger the distribution of the slit-type apertures 100 over the area of the light bar. A linear array of sensors can be arranged for receiving light from the light bar exiting LCC 52. In some implementations, the bridging sections 104 are located outside of the field of view of the detectors used to receive light exiting LCC 52.

In some implmentations, LCC 52 is configured to have a group of apertures 100 arranged to control light exiting the LCC. LCC 52 can be manufactured using a variety of processes including, but not limited to, injection molding, laser cutting and die cutting. The LCC 52 can be constructed as a stack of thin layers of foil, each having the same aperture arrangement. In implementations in which LCC 52 is a molded part, a number of suitable resins can be used during the manufacturing process. For example, a Liquid Crystal Polymer (LCP) type of resin, such as Ticona Vectra, can be used. The use of an LCP type resin to manufacture the LCC 52 allows for the manufacture of especially thin, but rigid walls, as required for some applications.

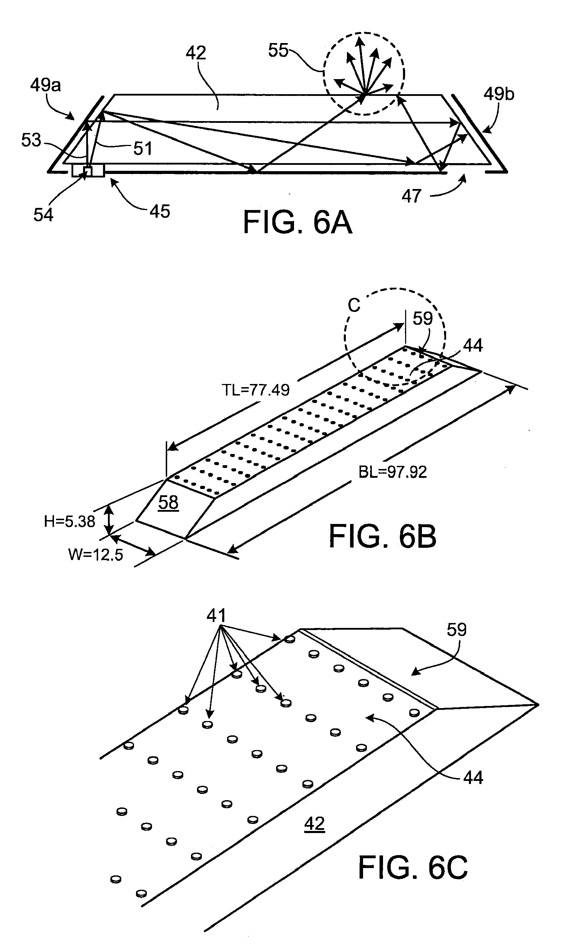

FIG. 6A is an enlarged, simplified, cross-sectional schematic diagram of a light pipe core 42 to illustrate how light from the LED source 54 exits the top surface 44. In particular, FIG. 6A depicts light from the LED source 54 entering the light pipe core 42 via input port 45 (formed by reflective shell portions 46 and 48 as shown in FIG. 4A). The first angled wall 49a is a combination of walls 46a and 48a, and the second angled wall 49b is a combination of walls 46b and 48b shown in FIG. 4A. In the light pipe core 42 implementation of FIG. 6A, light is reflected either by total internal reflection (TIR) for rays having an incidence greater that the critical angle (defined by the reflection index of the transparent plastic, typically 1.5) such as ray 51, or by reflection of the walls of the mixer shell surrounding the light pipe for rays incidence lower than the critical angle, such as ray 53. Reflected light rays can be sent back into the mixing structure to be reflected multiple times as shown until the beam reaches a diffuser area on the top surface 44 and exits as schematically shown in area 55. The light from the LED's is generally deflected horizontally across the light pipe due to the slope of the trapezoidal shape of the side walls 49a and 49b.

FIG. 6A also shows an input port 47 which may accommodate another light source. However, in some cases, only one light source is used on one end of the light pipe core 42, such as at input port 45. If such a configuration is used, then the input port 47 should be replaced with a reflective material to enhance the internal light reflection characteristics of the subassembly.

FIG. 6B illustrates the dimensions of an implementation of a light pipe core 42 suitable for use in a bill validator. A suitable light pipe core has a bottom length BL of about 97.92 mm, a width W of about 12.5 mm and a height H of about 5.38 mm. The top length TL is about 77.49 mm and is approximately centered over the bottom length such that the slope of the first end portion 58 and the slope of the second end portion 59 are substantially the same. The slope of these portion can be matched by the first angled wall 49a and the second angled wall 49b formed by the first and second reflective shell portions 46, 48. The top surface 44 of the light pipe core 42 can include a diffuser surface 43 to control the light intensity output. FIG. 6C illustrates and enlarged portion C of FIG. 6B, wherein an array of protrusions 41 are arranged on top surface 44 in a pattern. The pitch of the protrusions can be adjusted to balance the intensity of the light coming out along and across the light bar so that the light distribution is substantially homogenous. In an implementation, the density of the protrusions increases as the diffuser area is further away from the LED sources. In this manner, areas of local spots are created where the TIR conditions are destroyed and the light can exit the core. In some implementations, the protrusions are substantially cylindrical in shape, but other shapes are possible.

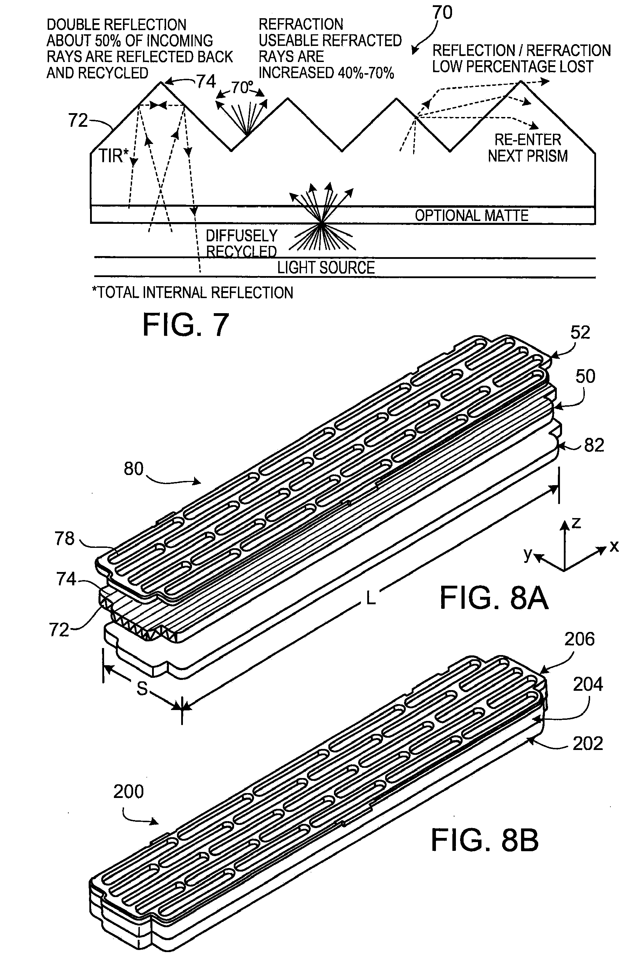

FIG. 7 is an enlarged, simplified side-view schematic diagram 70 illustrating the prismatic structures 72 of a suitable BEF, which is commercially available and manufactured by the Minnesota Mining and Manufacturing Corporation (the "3M Company"). Each prismatic structure 72 has an apex 74 that is substantially parallel to its neighbors. As shown, about 50% of light rays from a light source are reflected back and recycled by the BEF, and usable refracted rays are increased by 40% to 70%.

FIG. 8A is an enlarged, simplified, exploded, perspective view schematic diagram of an alternate implementation of a light core assembly 80 for a document validator. A suitable configuration of components includes a rectangular light pipe core 82 which can include a top diffusing surface, a BEF 50 and a LCC 52 for supplying light in a document validator. The BEF 50 is aligned so that each apex 74 of the prism structures 72 are substantially parallel with the aperture walls 78 of the LCC, and are substantially parallel to the edge of the long dimension "L" of the light pipe core 82, and perpendicular to the short side "S" of the core. A suitable BEF available from the 3M Company is BEF 90/50, where 90 is the prism angle and 50 is the prism pitch in micrometers (µm). A suitable LCC 52 can be configured as described above to control the geometry of the distribution of light exiting LCC 52.

FIG. 8B illustrates an alternative implementation of a light core assembly 200 which may have the same dimensions of FIG. 8A and be suitable for use in a document validator. The light core assembly 200 may be of unitary construction, and may include a light core 202, a prism structure layer 204 for increasing the light intensity that will be output, and LCC 206 (similar to LCC 52) for controlling the direction of the light as it exits the assembly in the Z-direction. A light diffusing layer (not shown) may also be included. Embodiments containing more or fewer layers also can be utilized for some applications. For example, an embodiment including light core 202, a diffusing layer and LCC 206 can be suitable for use in a document validation application.

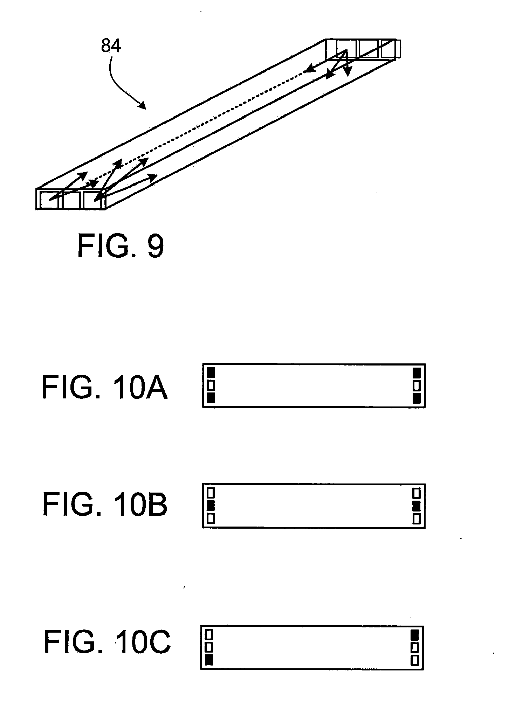

FIG. 9 is a simplified drawing of another implementation of a light pipe core 84 that can be realized as described above with reference to FIGS. 8A and 8B. In this implementation, the LED's are positioned vertically and the light pipe core is a simple rectangular parallel pipe as shown. In an example application, six wavelengths are used, and a single LED package accommodates two or three dies. For some wavelengths, four dies can be used, arranged two by two at each end of the light pipe. FIG. 10A is a geometrical mapping of dies in the packages for each wavelength when four dies are used, and FIGS. 10B and 10C when only two dies are used. In a suitable configuration, to optimize the light output, each LED package can include a white, reflective housing or packaging, and the apertures 45 and 47 (see FIG. 4A) are of minimum size to accommodate the package and to limit any light losses through inefficient coupling. The interior surface of the light housing for each LED source can comprise a reflective material, and the material can be a diffusely reflective material. Suitable LED packages are the TOPLED™ series from OSRAM Company. The LED package can be of a similar plastic material as the reflective shell. For example, the light housing can be made of a white material to permit a substantially flat spectral response to occur across at least the visible wavelength to the near infrared wavelength spectrum region. Light is extracted from the light pipe core 84 by a diffuser structure that can be made either by sanding the surface, or by creating a molded, rough random structure on the top side of the light pipe core. Alternatively, an array of protrusions can be formed on the top surface to function as a diffuser, as explained above with reference to FIG. 6C. In addition, other diffuser structures can also be used.

Various implementations of a document validator subassembly have been disclosed. One of ordinary skill in the art would understand that various additions and modifications can be made. For example, an alternate arrangement includes a second set of BEF and LCC (or prism and louver layers) whose optical structure is set at 90° from the first set to control the light distribution in the elongated direction of the light bar. Other implementations are within the scope of the claims.

## Claims

1. A subassembly (40) for a document validator (30), the sub-assembly comprising:
a housing;
a light pipe core (42) having a top diffusing surface (44) and seated in the housing;
a light control component (52) associated with the top diffusing surface, the light control component (52) including at least one aperture (100);
a plurality of light-emitting diodes (LEDs) coupled to the housing, wherein at least one LED differs in wavelength from another LED;
wherein the light control component (52) has an array of apertures (100) in the shape of elongated slits, wherein light of the light-emitting diodes travels through the slits and is stopped by walls (102) formed by the remaining material of the light control component (52) and wherein bridging sections (104) segment the length of the slits to improve rigidity and to maintain a spacing of the walls (102).

2. The subassembly according to claim 1 wherein the light control component (52) is made of a polymer material.

3. The subassembly according to any preceding claim further comprising a prism structure layer (50) between the top diffusing surface (44) and the light control component (52), wherein the prism structure is a brightness enhancing film.

4. The subassembly according to any preceding claim wherein the diffusing surface (44) comprises at least one of a random structure, a constant pitch pattern structure, or a variable pattern of protrusions.

5. The subassembly according to any preceding claim wherein the housing includes at least one input light port on at least one end of the light pipe core.

6. The subassembly according to any preceding claim, wherein the housing includes a reflective interior surface.

7. A light control component (52) for controlling the geometric distribution of light from a lighting source, comprising:
at least one aperture (100) in the light control component (52), the at least one aperture (100) arranged to limit the output angle of light transmitted through the at least one aperture (100),
wherein the at least one aperture (100) comprises an array of apertures (100) in the shape of elongated slits, wherein light of light-emitting diodes travels through the slits and is stopped by walls (102) formed by the remaining material of the light control component (52) and wherein bridging sections (104) segment the length of the slits to improve rigidity and to maintain a spacing of the walls (102).

8. The light control component according to claim 7 wherein the at least one aperture (100) is further arranged to limit the output angle of light in a different manner in two orthogonal directions.

9. The light control component according to claim 7 wherein the at least one aperture (100) is arranged to limit the output angle of light substantially equally in all directions.

10. The light control component according to claim 7 wherein the at least one aperture (100) extends substantially the entire length of the light control component (52).

11. The light control component according to claim 7 wherein the at least one aperture (100) segments the light control component (52) in the lengthwise direction.

12. The light control component according to claim 7 to 11 wherein the at least one aperture (100) segments the light control component (52) in the widthwise direction.

13. The light control component according to claim 7 wherein the light control component (52) is located opposite at least one detector capable of receiving light transmitted through the light control component (52), the detector positioned such that the bridging sections (104) are out of view of the detector.

## Patentansprüche

1. Baugruppe (40) für einen Dokumentenprüfer (30), wobei die Baugruppe umfasst:
ein Gehäuse;
einen Lichtleiter-Kern (42) mit einer oberen streuenden Oberfläche (44) und in dem Gehäuse gelegen;
eine lichtlenkende Komponente (52), die mit der oberen streuenden Oberfläche verknüpft ist, wobei die lichtlenkende Komponente (52) mindestens eine Öffnung (100) umfasst;
eine Mehrzahl an lichtemittierenden Dioden (LEDs), die an das Gehäuse gekoppelt sind, wobei zumindest eine LED eine andere Wellenlänge hat wie eine andere LED;
wobei die lichtlenkende Komponente (52) ein Feld von Öffnungen (100) in der Form von länglichen Schlitzen aufweist, wobei Licht von den lichtemittierenden Dioden durch die Schlitze läuft und von Wänden (102) gestoppt wird, die aus dem restlichen Material der lichtlenkenden Komponente (52) geformt sind, und wobei Brückenbereiche (104) die Länge der Schlitze in Segmente aufteilen, um Stabilität zu verbessern und den Abstand der Wände (102) aufrecht zu halten.

2. Baugruppe gemäß Anspruch 1, wobei die lichtlenkende Komponente (52) aus einem Polymer-Material gemacht ist.

3. Baugruppe gemäß irgendeinem vorangehenden Anspruch, außerdem umfassend eine Prismenstruktur-Schicht (50) zwischen der oberen streuenden Oberfläche (44) und der lichtlenkenden Komponente (52), wobei die Prismenstruktur ein helligkeitsverstärkender Film ist.

4. Baugruppe gemäß irgendeinem vorangehenden Anspruch, wobei die streuende Oberfläche (44) mindestens eines umfasst aus einer regellosen Struktur, einer gemusterten Struktur mit konstanter Teilung oder einem variablen Muster an Vorsprüngen.

5. Baugruppe gemäß irgendeinem vorangehenden Anspruch, wobei das Gehäuse mindestens eine Eingang-Licht-Schnittstelle an mindestens einem Ende des Lichtleiter-Kerns aufweist.

6. Baugruppe gemäß irgendeinem vorangehenden Anspruch, wobei das Gehäuse eine reflektierende innere Oberfläche beinhaltet.

7. Lichtlenkende Komponente (52) zum Lenken der geometrischen Verteilung von Licht von einer Lichtquelle, umfassend:
mindestens eine Öffnung (100) in der lichtlenkenden Komponente (52), wobei die mindestens eine Öffnung (100) angeordnet ist, um einen Ausgangswinkel von Licht, das durch die mindestens eine Öffnung (100) transmittiert wird, zu limitieren,
wobei die mindestens eine Öffnung (100) ein Feld an Öffnungen (100) in der Form von länglichen Schlitzen umfasst, wobei Licht von lichtemittierenden Dioden durch die Schlitze läuft und von Wänden (102) gestoppt wird, die aus dem restlichen Material der lichtlenkenden Komponente (52) geformt sind, und wobei Brückenbereiche (104) die Länge der Schlitze in Segmente aufteilen, um Stabilität zu verbessern und den Abstand der Wände (102) aufrecht zu halten.

8. Lichtlenkende Komponente gemäß Anspruch 7, wobei die mindestens eine Öffnung (100) außerdem angeordnet ist, um den Ausgangswinkel von Licht in unterschiedliche Weise in zwei orthogonalen Richtungen zu limitieren.

9. Lichtlenkende Komponente gemäß Anspruch 7, wobei die mindestens eine Öffnung (100) angeordnet ist, um den Ausgangswinkel von Licht im Wesentlichen gleich in alle Richtungen zu limitieren.

10. Lichtlenkende Komponente gemäß Anspruch 7, wobei die mindestens eine Öffnung (100) sich im Wesentlichen über die gesamte Länge der lichtlenkenden Komponente (52) erstreckt.

11. Lichtlenkende Komponente gemäß Anspruch 7, wobei die mindestens eine Öffnung (100) die lichtleitende Komponente (52) in Längsrichtung in Segmente aufteilt.

12. Lichtlenkende Komponente gemäß irgendeinem der Ansprüche 7 bis 11, wobei die mindestens eine Öffnung (100) die lichtleitende Komponente (52) in Querrichtung in Segmente aufteilt.

13. Lichtlenkende Komponente gemäß Anspruch 7, wobei die lichtlenkende Komponente (52) gegenüber von mindestens einem Detektor angeordnet ist, der fähig ist, Licht, das durch die lichtlenkende Komponente (52) transmittiert wird, zu empfangen, wobei der Detektor so positioniert ist, dass die Brückenbereiche (104) außerhalb des Sichtbereichs des Detektors sind.

## Revendications

1. Sous-ensemble (40) pour un valideur de documents (30), le sous-ensemble comprenant :
un boîtier ;
un coeur de conduit de lumière (42) ayant une surface de diffusion supérieure (44) et étant disposé dans le boîtier ;
un composant de contrôle de lumière (52) associé à la surface de diffusion supérieure, le composant de contrôle de lumière (52) comprenant au moins une ouverture (100) ;
une pluralité de diodes électroluminescentes (LED) couplées au boîtier, où au moins une LED a une longueur d'onde différente d'une autre LED ;
où le composant de contrôle de lumière (52) a un réseau d'ouvertures (100) ayant la forme de fentes allongées, où la lumière des diodes électroluminescentes se propage à travers les fentes et est stoppée par des parois (102) formées par le matériau restant du composant de contrôle de lumière (52) et où des sections de pontage (104) segmentent la longueur des fentes pour améliorer la rigidité et maintenir un espacement des parois (102).

2. Sous-ensemble selon la revendication 1, dans lequel le composant de contrôle de lumière (52) est constitué d'un matériau polymère.

3. Sous-ensemble selon l'une quelconque des revendications précédentes, comprenant en outre une couche de structure de prisme (50) entre la surface de diffusion supérieure (44) et le composant de contrôle de lumière (52), où la structure de prisme est un film d'amélioration de la luminosité.

4. Sous-ensemble selon l'une quelconque des revendications précédentes, dans lequel la surface de diffusion (44) comprend au moins une structure aléatoire, une structure de motif à pas constant, ou un motif variable de protubérances.

5. Sous-ensemble selon l'une quelconque des revendications précédentes, dans lequel le boîtier comporte au moins un port de lumière d'entrée sur au moins une extrémité du coeur de conduit de lumière.

6. Sous-ensemble selon l'une quelconque des revendications précédentes, dans lequel le boîtier comporte une surface intérieure réfléchissante.

7. Composant de contrôle de lumière (52) destiné à contrôler la distribution géométrique de la lumière provenant d'une source d'éclairage, comprenant :
au moins une ouverture (100) dans le composant de contrôle de lumière (52), l'au moins une ouverture (100) étant arrangée pour limiter l'angle de sortie de la lumière transmise à travers l'au moins une ouverture (100),
où l'au moins une ouverture (100) comprend un réseau d'ouvertures (100) ayant la forme de fentes allongées, où la lumière des diodes électroluminescentes se propage à travers les fentes et est stoppée par des parois (102) formées par le matériau restant du composant de contrôle de lumière (52) et où des sections de pontage (104) segmentent la longueur des fentes pour améliorer la rigidité et maintenir un espacement des parois (102).

8. Composant de contrôle de lumière selon la revendication 7, dans lequel l'au moins une ouverture (100) est en outre arrangée pour limiter l'angle de sortie de la lumière d'une manière différente dans deux directions orthogonales.

9. Composant de contrôle de lumière selon la revendication 7, dans lequel l'au moins une ouverture (100) est arrangée pour limiter l'angle de sortie de la lumière de façon sensiblement égale dans toutes les directions.

10. Composant de contrôle de lumière selon la revendication 7, dans lequel l'au moins une ouverture (100) se prolonge sensiblement sur toute la longueur du composant de contrôle de lumière (52).

11. Composant de contrôle de lumière selon la revendication 7, dans lequel l'au moins une ouverture (100) segmente le composant de contrôle de lumière (52) dans le sens de la longueur.

12. Composant de contrôle de lumière selon l'une quelconque des revendications 7 à 11, dans lequel l'au moins une ouverture (100) segmente le composant de contrôle de lumière (52) dans le sens de la largeur.

13. Composant de contrôle de lumière selon la revendication 7, dans lequel le composant de contrôle de lumière (52) est situé de manière opposée à au moins un détecteur capable de recevoir la lumière transmise à travers le composant de contrôle de lumière (52), le détecteur étant positionné de telle sorte que les sections de pontage (104) soient hors de vue du détecteur.
